# EUROPÄISCHE PATENTSCHRIFT

(11) **EP 1 773 848 B1**
(45) Veröffentlichungstag und Bekanntmachung des Hinweises auf die Patenterteilung: **30.12.2009**
(21) Anmeldenummer: 05773896.5
(22) Anmeldetag: 09.07.2005
(51) Int. Cl.: C07F 5/02, C07D 233/00

(54) **SALZE MIT ALKOXYTRIS(FLUORALKYL)BORAT-ANIONEN**
SALTS CONTAINING ALKOXYTRIS (FLUOROALKYL) BORATE ANIONS
SELS A ANIONS D'ALCOXYTRIS (FLUOROALKYL) BORATE

(30) Priorität: 27.07.2004 EP 04036299
(43) Veröffentlichungstag der Anmeldung: 18.04.2007
(73) Patentinhaber: Merck Patent GmbH, 64293 Darmstadt (DE)
(72) Erfinder: IGNATYEV, Nikolai (Mykola), 47058 Duisburg (DE); WELZ-BIERMANN, Urs, 64646 Heppenheim (DE); FINZE, Maik, 31582 Nienburg (DE); BERNHARDT, Eduard, 42107 Wuppertal (DE); WILLNER, Helge, 45481 Muelheim/Ruhr (DE)
(86) Internationale Anmeldenummer: PCT/EP2005/007448
(87) Internationale Veröffentlichungsnummer: WO 2006/010455

(56) Entgegenhaltungen:
- ADONIN, NICOLAY YU. ET AL: "(Fluoroorgano)fluoroboranes and -borates. 12. Reactions of (Trifluorovinyl)lithium with Chloro-, Chloromethoxy-, and (Trifluorovinyl)methoxyboranes, a Useful Route to (Trifluorovinyl)fluoroborate Salts" ORGANOMETALLICS , 23(3), 535-539 CODEN: ORGND7; ISSN: 0276-7333, 31. Dezember 2003 (2003-12-31), XP002353492
- DATABASE CA [Online] CHEMICAL ABSTRACTS SERVICE, COLUMBUS, OHIO, US; ANSORGE, ANDREAS ET AL: "Complexes of (CF3)3B with sterically crowded amines. Unexpected side products from the trifluoromethylation of Cl2BN(tert-Bu)(Bz). Crystal and molecular structures of (CF3)3BNH(CH2)6, HO(CF3)2BCH(Ph)NH(tert-Bu)(Bz) and Ph(CF3)2BCHN(tert-Bu)(Bz)" XP002353496 gefunden im STN Database accession no. 1992:511672 & ZEITSCHRIFT FUER NATURFORSCHUNG, B: CHEMICAL SCIENCES , 47(6), 772-82 CODEN: ZNBSEN; ISSN: 0932-0776, 1992,
- ZHOU Z-B ET AL: "New hydrophobic ionic liquids based on perfluoroalkyltrifluoroborate anions" JOURNAL OF FLUORINE CHEMISTRY, ELSEVIER SEQUOIA. LAUSANNE, CH, Bd. 125, 2004, Seiten 471-476, XP002327607 ISSN: 0022-1139
- HABUSHA, URI ET AL: "Tuning carbanion reactivity by complexing with boranes: .gamma.-elimination reaction as a model" JOURNAL OF PHYSICAL ORGANIC CHEMISTRY , 17(11), 983-989 CODEN: JPOCEE; ISSN: 0894-3230, 21. Juli 2004 (2004-07-21), XP009056896

## Beschreibung

Die Erfindung betrifft Salze mit Alkoxytris(fluoralkyl)borat-Anionen, sowie Verfahren zu Ihrer Herstellung.

Die erfindungsgemäßen Salze können einerseits zur Synthese von ionischen Flüssigkeiten verwendet werden, andererseits können die Salze per se als ionische Flüssigkeit eingesetzt werden.

Ionische Flüssigkeiten oder flüssige Salze sind ionische Spezies, die aus einem organischen Kation und einem in der Regel anorganischen Anion bestehen. Sie enthalten keine neutralen Moleküle und weisen meistens Schmelzpunkte kleiner 373 K auf.

Das Gebiet der ionischen Flüssigkeiten wird zur Zeit intensiv erforscht, da die Anwendungsmöglichkeiten vielfältig sind. Übersichtsartikel zu ionischen Flüssigkeiten sind beispielsweise R. Sheldon "Catalytic reactions in ionic liquids", Chem. Commun., 2001, 2399-2407; M.J. Earle, K.R. Seddon "lonic liquids. Green solvent for the future", Pure Appl. Chem., 72 (2000), 1391-1398; P. Wasserscheid, W. Keim "Ionische Flüssigkeiten - neue Lösungen für die Übergangsmetallkatalyse", Angel. Chem., 112 (2000), 3926-3945; T. Welton "Room temperature ionic liquids. Solvents for synthesis and catalysis", Chem. Rev., 92 (1999), 2071-2083 oder R. Hagiwara, Ya. Ito "Room temperature ionic liquids of alkylimidazolium cations and fluoroanions", J. Fluorine Chem., 105 (2000), 221-227).

Die Eigenschaften ionischer Flüssigkeiten, z.B. Schmelzpunkt, thermische und elektrochemische Stabilität, Viskosität, werden stark von der Natur des Anions beeinflusst. Demgegenüber können die Polarität und die Hydrophilie bzw. Lipophilie durch die geeignete Wahl des Kation/Anion-Paares variiert werden. Ionische Flüssigkeiten enthalten als Kationen beispielsweise Alkylphosphonium, Alkylammonium, Sulfonium oder heterocyclische Kationen wie 1,3-Dialkylimidazolium oder N-Alklylpyridinium. Bekannte Anionen sind beispielsweise [AICl₄]⁻, [Al₂Cl₇]⁻, NO₃⁻, BF₄-, PF₆⁻, Alkyl- und Arylsulfonate, Phosphate, Imide, Methide, Carboxylate oder auch inerte Carborane.

Aus E. Bernhardt et al, Z. Anorg. Allg. Chem. 2000, 626, 560, E. Bernhardt et al, Chem. Eur. J. 2001, 7, 4696 und E. Bernhardt et al, Z. Anorg. Allg. Chem. 2003, 629,1229 sind die neuen chemisch und elektrochemisch stabilen Boratanionen [B(CN)₄]⁻, [FₓB(CN)₄₋ₓ]⁻ mit x = 1 bis 3 und [B(CF₃)₄]⁻ bekannt.

EP 1205480 A1 beschreibt Tetrakisfluoralkylboratsalze und deren Verwendung als Leitsalze oder ionische Flüssigkeiten.

ADONIN, NICOLAY YU. ET AL: "(Fluoroorgano)fluoroboranes and -borates. 12. Reactions of (Trifluorovinyl)lithium with Chloro-, Chloromethoxy-, and (Trifluorovinyl)methoxyboranes, a Useful Route to (Trifluorovinyl)fluoroborate Salts" ORGANOMETALLICS , 23(3), 535-539 (2004) offenbart (der Verweis in Klammern bezieht sich auf dieses Dokument): Li-Tris(trifluorvinyl)methoxyborat Li[(CF₂=CF)₃BOMe] (Tabelle 3)

Aufgabe der vorliegenden Erfindung war es, neue sowie thermisch und elektrochemisch als auch Hydrolyse-stabile salzartige Verbindungen, die als ionische Flüssigkeiten oder zur Synthese von ionischen Flüssigkeiten verwendet werden können, sowie ein Verfahren zu ihrer Herstellung, zur Verfügung zu stellen.

Die Aufgabe wird durch die erfindungsgemäßen Salze der Formel (1) gelöst.

Gegenstand der Erfindung sind daher Salze der allgemeinen Formel (1)

M^{a+} [RO-B(R^{F})₃]ₐ (1)

worin,
- M^{a+}: ein- oder zweiwertiges Kation,
- a: 1 oder 2,
- R: geradkettiges oder verzweigtes Alkyl mit 1 bis 10 C-Atomen, Aryl oder Aryl-C₁-C₆-alkyl und
- R^{F}: jeweils unabhängig voneinander fluoriertes geradkettiges oder verzweigtes Alkyl mit 1 bis 20 C-Atomen, fluoriertes geradkettiges oder verzweigtes C₁-C₆-Alkyl-aryl oder fluoriertes Aryl-C₁-C₆-alkyl bedeutet.

Unter einer Alkylgruppe mit 1 bis 10 C-Atomen versteht man beispielsweise Methyl, Ethyl, Isopropyl, Propyl, Butyl, sek.-Butyl oder tert.-Butyl, ferner auch Pentyl, 1-, 2- oder 3-Methylbutyl, 1,1-, 1,2- oder 2,2-Dimethylpropyl, 1-Ethylpropyl, Hexyl, Heptyl, Octyl, Nonyl oder Decyl. Die Alkylgruppen können auch teilweise oder vollständig mit Halogenen, insbesondere -F und/oder -Cl substituiert sein. Fluorierte Alkylgruppen sind Difluormethyl, Trifluormethyl, Pentafluorethyl, Pentafluorpropyl, Heptafluorpropyl, Heptafluorbutyl oder Nonafluorbutyl.

Aryl bedeutet Phenyl oder Naphthyl, vorzugsweise Phenyl.

Aryl-C₁-C₆-alkyl bedeutet beispielsweise Benzyl, Phenylethyl, Phenylpropyl, Phenylbutyl, Phenylpentyl oder Phenylhexyl. Fluoriertes Aryl-C₁-C₆-alkyl bedeutet beispielsweise Pentafluorphenyldifluormethyl oder Pentafluorphenyltetrafluorethyl.

Fluoriertes geradkettiges oder verzweigtes C₁-C₆-Alkyl-aryl bedeutet, dass die fluorierte Arylgruppe, mit einer fluorierten C₁-C₆-Alkylgruppe substituiert vorliegt, beispielsweise -C₆F₄CF₃, -C₆F₄C₂F₅, -C₆F₄C₃F₇, -C₆F₄C₄F₉, -C₆F₄C₅F₁₁ oder -C₆F₄C₆F₁₃.

R ist bevorzugt geradkettiges oder verzweigtes Alkyl mit 1 bis 10 C-Atomen, besonders bevorzugt geradkettiges oder verzweigtes Alkyl mit 1 bis 6 C-Atomen. R ist ganz besonders bevorzugt Methyl, Ethyl, Propyl oder i-Propyl. R ist insbesondere ganz besonders bevorzugt Methyl.

R^{F} ist bevorzugt perfluoriertes geradkettiges oder verzweigtes Alkyl mit 1 bis 20 C-Atomen, besonders bevorzugt perfluoriertes geradkettiges oder verzweigtes Alkyl mit 1 bis 6 C-Atomen. Ganz besonders bevorzugt ist R^{F} Trifluormethyl.

Erfindungsgemäß ist eine Gruppe von Verbindungen der Formel I bevorzugt, in denen das Kation M^{a+} ein Alkalimetall-Kation, vorzugsweise ein Lithium-, Natrium- oder Kalium-Kation, ist.

Diese Gruppe an Verbindungen eignet sich insbesondere zur Synthese von ionischen Flüssigkeiten mit dem erfindungsgemäßen Anion durch Metathese mit einem Salz MX, bestehend aus einem organischen Kation, wie nachstehend definiert, und dem Gegenion X F⁻, Cl⁻, Br⁻, I⁻, [HF₂]⁻, [CN]⁻, [SCN]⁻, [CH₃COO]⁻, [CH₃SO₃]⁻, [CF₃COO]⁻, [CF₃SO₃]⁻, [CH₃OSO₃] , [SiF₆]²⁻, [BF₄]⁻, [SO₄]²⁻, [NO₃]⁻, [C₂H₅OSO₃]⁻, [(C₂F₅)₂P(O)O]⁻, [C₂F₅P(O)O2]²⁻, Tosylate, Malonate, substituierte Malonate oder [CO₃]²⁻, wobei in der Formel des Salzes MX die Elektroneutralität zu beachten ist. Vorzugsweise ist das Anion F^{-,} Cl⁻, Br^{-,} I⁻, [HF₂]⁻, [CH₃SO₃]⁻ [CH₃OSO₃]⁻, [CF₃COO]⁻, [CF₃SO₃]⁻, [(C₂F₅)₂P(O)O]⁻ oder [CO₃]²⁻, besonders bevorzugt Cl⁻, Br⁻, [CH₃OSO₃]⁻, [CF₃SO₃]⁻ oder [(C₂F₅)₂P(O)O]⁻.

Die Lithiumverbindungen dieser Gruppe eignen sich insbesondere als Leitsalze in Elektrolyten, primären Batterien, sekundären Batterien, Kondensatoren, Superkondensatoren oder galvanischen Zellen, gegebenenfalls auch in Kombination mit weiteren Leitsalzen und/oder Zusatzstoffen, als Bestandteil eines Polymerelektrolyten oder Phasen-Transfer-Mittel.

Erfindungsgemäß ist eine Gruppe von Verbindungen der Formel I bevorzugt, in denen das Kation M^{a+} ein Silber-, Magnesium-, Kupfer(I)-, Kupfer(II))-, Zink(II)- oder Calcium(II)-Kation ist. Die Kupfer(II)-, Zink(II) oder Calcium(II)-Kationen liegen bevorzugt in solvatisierter Form vor.

Diese Gruppe von Verbindungen eignet sich ebenfalls zur Synthese von ionischen Flüssigkeiten mit dem erfindungsgemäßen Anion durch Metathese mit einem Salz MX, wie zuvor für die Verbindungen der Formel I mit Alkalimetall-Kationen beschrieben.
Diese Gruppe von Verbindungen eignet sich insbesondere für eine Metallabscheidung oder als Phasen-Transfer-Mittel.

Erfindungsgemäß ist eine Gruppe von Verbindungen der Formel I bevorzugt, in denen das Kation M^{a+} ein organisches Kation ist.

Das organische Kation kann dabei aus der Gruppe [NR¹R²R³R⁴]⁺, [PR¹R²R³R⁴], IP(NR¹R²)₂(NR³R⁴)₂]⁺, [C(NR¹R²)(NR³R⁴)(NR⁵R⁶)]⁺, [(R¹R²N)-C(=OR⁷)(NR³R⁴)]⁺ oder [(R¹R²N)-C(=SR⁷)(NR³R⁴)]⁺ ausgewählt werden, wobei
R¹ bis R⁷ jeweils unabhängig voneinander Wasserstoff oder geradkettiges oder verzweigtes Alkyl mit 1 bis 20 C-Atomen,
geradkettiges oder verzweigtes Alkenyl mit 2-20 C-Atomen und einer oder mehreren Doppelbindungen,
geradkettiges oder verzweigtes Alkinyl mit 2-20 C-Atomen und einer oder mehreren Dreifachbindungen,
gesättigtes, teilweise oder vollständig ungesättigtes Cycloalkyl mit 3-7 C-Atomen, das mit Alkylgruppen mit 1-6 C-Atomen substituiert sein kann, bedeutet,
wobei ein oder mehrere der Substituenten R¹ bis R⁷ teilweise oder vollständig mit Halogenen, insbesondere -F und/oder -Cl, oder teilweise mit -CN oder -NO₂, substituiert sein können
und wobei ein oder zwei nicht benachbarte und nicht α-ständige Kohlenstoffatome der Substituenten R¹ bis R⁶ durch Atome und/oder Atomgruppierungen ausgewählt aus der Gruppe -O-, -C(O)-, -C(O)O-, -S-,-S(O)-, -SO₂-, -SO₂O-, -N=, -N=N-, -NH-, -NR'-, -PR'-, -P(O)R'-, -P(O)R'-O-, -O-P(O)R'-O-, -P(O)(NR'₂)-NR'- und -PR'₂=N- mit R' = nicht, teilweise oder perfluoriertes C₁- bis C₆-Alkyl, C₃- bis C₇-Cycloalkyl, unsubstituiertes oder substituiertes Phenyl oder unsubstituierter oder substituierter Heterocyclus, ersetzt sein können.

Ein geradkettiges oder verzweigtes Alkenyl mit 2 bis 20 C-Atomen, wobei auch mehrere Doppelbindungen vorhanden sein können, ist beispielsweise Allyl, 2- oder 3-Butenyl, Isobutenyl, sek.-Butenyl, ferner 4-Pentenyl, iso-Pentenyl, Hexenyl, Heptenyl, Octenyl, -C₉H₁₇, -C₁₀H₁9 bis-C₂₀H₃₉, vorzugsweise Allyl, 2- oder 3-Butenyl, Isobutenyl, sek.-Butenyl, ferner bevorzugt ist 4-Pentenyl, iso-Pentenyl oder Hexenyl.

Ein geradkettiges oder verzweigtes Alkinyl mit 2 bis 20 C-Atomen, wobei auch mehrere Dreifachbindungen vorhanden sein können, ist beispielsweise Ethinyl, 1- oder 2-Propinyl, 2- oder 3-Butinyl, ferner 4-Pentinyl, 3-Pentinyl, Hexinyl, Heptinyl, Octinyl, -C₉H₁₅, -C₁₀H₁₇ bis -C₂₀H₃₇, vorzugsweise Ethinyl, 1- oder 2-Propinyl, 2- oder 3-Butinyl, 4-Pentinyl, 3-Pentinyl oder Hexinyl.

Unsubstituierte gesättigte oder teilweise oder vollständig ungesättigte Cycloalkylgruppen mit 3-7 C-Atomen sind daher Cyclopropyl, Cyclobutyl, Cyclopentyl, Cyclohexyl, Cycloheptyl, Cyclopentenyl, Cyclopenta-1,3-dienyl, Cyclohexenyl, Cyclohexa-1,3-dienyl, Cyclohexa-1,4-dienyl, Phenyl, Cycloheptenyl, Cyclohepta-1,3-dienyl, Cyclohepta-1,4-dienyl oder Cyclohepta-1,5-dienyl, welche mit C₁- bis C₆-Alkylgruppen substituiert sein können, wobei wiederum die Cycloalkylgruppe oder die mit C₁- bis C₆-Alkylgruppen substituierte Cycloalkylgruppe auch mit Halogenatomen wie F, Cl, Br oder I, insbesondere F oder Cl, CN oder NO₂ substituiert sein kann.

Die Substituenten R¹ bis R⁷ können teilweise oder vollständig mit Halogenatomen, insbesondere mit F und/oder Cl, oder teilweise mit CN oder NO₂ substituiert sein.

Ferner können die Substituenten R¹ bis R⁶ ein oder zwei, einander nicht benachbarte Heteroatome oder Atomgruppierungen, ausgewählt aus der Gruppe -O-, -C(O)-, -C(O)O-, -S-, -S(O)-, -SO₂-, -SO₂O-, -N=, -N=N-, -NH-, -NR'-, -PR'-, -P(O)R'-, -P(O)R'-O-, -O-P(O)R'-O-, -P(O)(NR'₂)-NR'- und-PR'₂=N- enthalten, wobei R' ein nicht, teilweise oder perfluoriertes C₁- bis C₆-Alkyl, C₃- bis C₇-Cycloalkyl, unsubstituiertes oder substituiertes Phenyl oder unsubstituierter oder substituierter Heterocyclus, sein kann, die nicht α-ständig zu einem Stickstoffatom oder Phosphoratom stehen.

In R' ist C₃- bis C₇-Cycloalkyl beispielweise Cyclopropyl, Cyclobutyl, Cyclopentyl, Cyclohexyl oder Cycloheptyl.

In R' bedeutet substituiertes Phenyl, durch C₁- bis C₆-Alkyl, C₁- bis C₆-Alkenyl, NO₂, F, Cl, Br, I, OH, C₁-C₆-Alkoxy, CN, SCN, SCF₃, SO₂CF₃, C(O)O-C₁-C₆-Alkyl, NH₂, C₁-C₆-Alkylamino oder C₁-C₆-Dialkylamino, COOH, C(O)NR"₂, SO₂OR", SO₂X', SO2_{N}R"₂, SO₃H oder NHC(O)R" substituiertes Phenyl, wobei X' F, Cl oder Br und R" ein nicht, teilweise oder perfluoriertes C₁- bis C₆-Alkyl oder C₃- bis C₇-Cycloalkyl wie für R' definiert bedeutet, beispielsweise, o-, m- oder p-Methylphenyl, o-, m- oder p-Ethylphenyl, o-, m- oder p-Propylphenyl, o-, m- oder p-Isopropylphenyl, o-, m- oder p-tert.-Butylphenyl, o-, m- oder p-Aminophenyl, o-, m- oder p-(N,N-Dimethylamino)phenyl, o-, m- oder p-Nitrophenyl, o-, m- oder p-Hydroxyphenyl, o-, m- oder p-Methoxyphenyl, o-, m- oder p-Ethoxyphenyl, o-, m-, p-(Trifluormethyl)phenyl, o-, m-, p-(Trifluormethoxy)phenyl, o-, m-, p-(Trifluormethylsulfonyl)phenyl, o-, m- oder p-Fluorphenyl, o-, m- oder p-Chlorphenyl, o-, m- oder p-Bromphenyl, o-, m- oder p-Iodphenyl, weiter bevorzugt 2,3-, 2,4-, 2,5-, 2,6-, 3,4- oder 3,5-Dimethylphenyl, 2,3-, 2,4-, 2,5-, 2,6-, 3,4- oder 3,5-Dihydroxyphenyl, 2,3-, 2,4-, 2,5-, 2,6-, 3,4- oder 3,5-Difluorphenyl, 2,3-, 2,4-, 2,5-, 2,6-, 3,4- oder 3,5-Dichlorphenyl, 2,3-, 2,4-, 2,5-, 2,6-, 3,4- oder 3,5-Dibromphenyl, 2,3-, 2,4-, 2,5-, 2,6-, 3,4- oder 3,5-Dimethoxyphenyl, 5-Fluor-2-methylphenyl, 3,4,5-Trimethoxyphenyl oder 2,4,5-Trimethylphenyl.

In R' wird als Heterocyclus ein gesättigter oder ungesättigter mono- oder bicyclischer heterocyclischer Rest mit 5 bis 13 Ringgliedern verstanden, wobei 1, 2 oder 3 N- und/oder 1 oder 2 S- oder O-Atome vorliegen können und der heterocyclische Rest ein- oder mehrfach durch C₁- bis C₆-Alkyl, C₁- bis C₆-Alkenyl, NO₂, F, Cl, Br, I, OH, C₁-C₆-Alkoxy, CN, SCN, SCF₃, SO₂CF₃, C(O)O-C₁-C₆-Alkyl, NH₂, C₁-C₆-Alkylamino oder C₁-C₆-Dialkylamino, COOH, C(O)NR"₂, SO₂OR", SO₂X', SO₂NR"₂, SO₃H oder NHC(O)R" substituiert sein kann, wobei X' und R" eine zuvor angegebene Bedeutung haben.

Der heterocyclische Rest ist vorzugsweise substituiertes oder unsubstituiertes 2- oder 3-Furyl, 2- oder 3-Thienyl, 1-, 2- oder 3-Pyrrolyl, 1-, 2-, 4- oder 5-Imidazolyl, 3-, 4- oder 5-Pyrazolyl, 2-, 4- oder 5-Oxazolyl, 3-, 4- oder 5-Isoxazolyl, 2-, 4- oder 5-Thiazolyl, 3-, 4- oder 5-Isothiazolyl, 2-, 3- oder 4-Pyridyl, 2-, 4-, 5- oder 6-Pyrimidinyl, weiterhin bevorzugt 1,2,3-Triazol-1-, -4- oder -5-yl, 1,2,4-Triazol-1-, -4- oder -5-yl, 1- oder 5-Tetrazolyl, 1,2,3-Oxadiazol-4- oder -5-yl 1,2,4-Oxadiazol-3- oder -5-yl, 1,3,4-Thiadiazol-2- oder -5-yl, 1,2,4-Thiadiazol-3- oder -5-yl, 1,2,3-Thiadiazol-4- oder -5-yl, 2-, 3-, 4-, 5- oder 6-2H-Thiopyranyl, 2-, 3- oder 4-4H-Thiopyranyl, 3- oder 4-Pyridazinyl, Pyrazinyl, 2-, 3-, 4-, 5-, 6- oder 7-Benzofuryl, 2-, 3-, 4-, 5-, 6- oder 7-Benzothienyl, 1-, 2-, 3-, 4-, 5-, 6- oder 7-1H-Indolyl, 1-, 2-, 4- oder 5-Benzimidazolyl, 1-, 3-, 4-, 5-, 6- oder 7-Benzopyrazolyl, 2-, 4-, 5-, 6- oder 7-Benzoxazolyl, 3-, 4-, 5-, 6- oder 7-Benzisoxazolyl, 2-, 4-, 5-, 6- oder 7-Benzthiazolyl, 2-, 4-, 5-, 6- oder 7-Benzisothiazolyl, 4-, 5-, 6- oder 7-Benz-2,1,3-oxadiazolyl, 1-, 2-, 3-, 4-, 5-, 6-, 7- oder 8-Chinolinyl, 1-, 3-, 4-, 5-, 6-, 7- oder 8-Isochinolinyl, 1-, 2-, 3-, 4- oder 9-Carbazolyl, 1-, 2-, 3-, 4-, 5-, 6-, 7-, 8- oder 9-Acridinyl, 3-, 4-, 5-, 6-, 7- oder 8-Cinnolinyl, 2-, 4-, 5-, 6-, 7- oder 8-Chinazolinyl oder 1-, 2- oder 3-Pyrrolidinyl.

Ohne Einschränkung der Allgemeinheit sind Beispiele für Substituenten R¹ bis R⁶ oder auch nachfolgend für die Substituenten R¹' bis R⁴': -CH₃, -C₂H₅, -C₃H₇, -CH(CH₃)₂, -C₄H₉, -C(CH₃)₃, -C₅H₁₁, -C₆H₁₃, -C₇H₁₅ -C₈H₁₇, -C₉H₁₉, -C₁₀H₂₁, -C₁₂H₂₅, -C₂₀H₄₁, -CH₂OCH₃, -C₂H₄OCH(CH₃)₂, - C₂H₄SC₂H₅, -C₂H₄SCH(CH₃)₂, -CH₂SO₂CH₃, -CH₂N(H)C₂H₅, -C₂H₄N(H)C₂H₅, -CH₂N(CH₃)CH₃, -CN, -C₂H₄N(CH₃)CH₃, -CF₃, -C₂F₅, - C₃F₇, -C₄F₉, -C(CF₃)₃, -CF₂SO₂CF₃, -C₂F₄N(C₂F₅)C₂F₅, -CHF₂, -CH₂CF₃, - C₂F₂H₃, -C₃FH₆, -CH₂C₃F₇, -C(CFH₂)₃, -CH₂C(O)OH, -CH₂C₆H₅, - CH₂C(O)CH₃, -CH₂C(O)C₂H₅, -CH₂C(O)OCH₃, CH₂C(O)OC₂H₅, -C(O)CH₃, -C(O)C₆H₅, -C(O)OCH₃, -C(O)OC₂H₅,

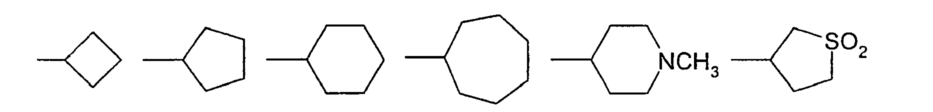

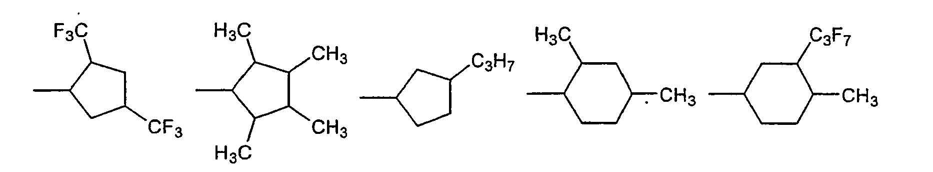

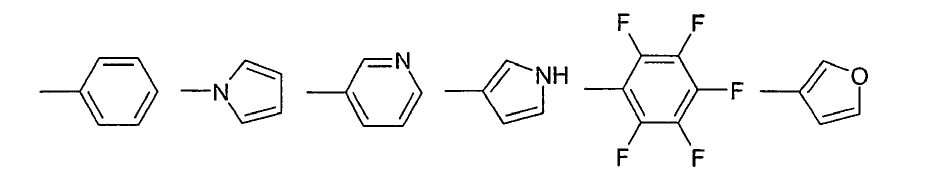

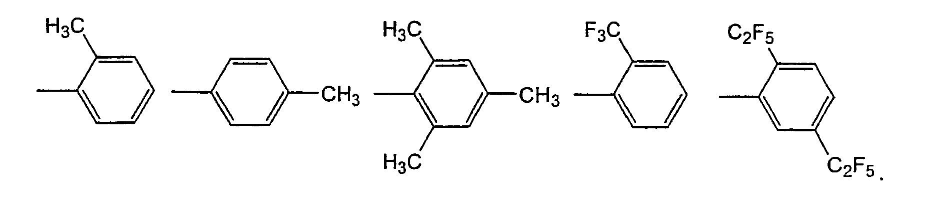

Bis zu vier Substituenten des Guanidinium-Kations [C(NR¹R²)(NR³R⁴)(NR⁵R⁶)]⁺ können auch paarweise derart verbunden sein, dass mono-, bi- oder polycyclische Kationen entstehen.
Ohne Einschränkung der Allgemeinheit sind Beispiele für solche Guanidinium-Kationen: 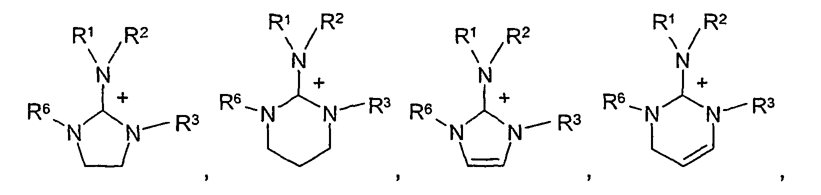 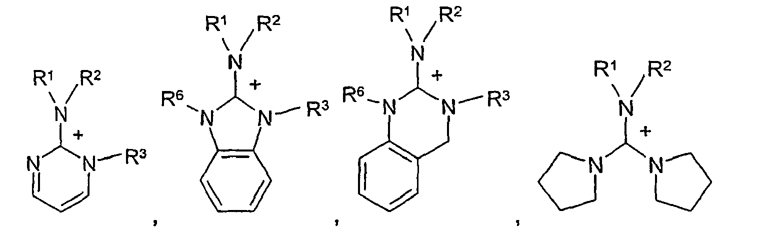 oder 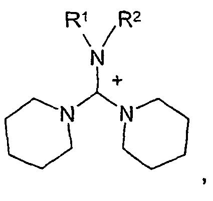 wobei die Substituenten R¹ bis R³ und R⁶ eine zuvor angegebene oder besonders bevorzugte Bedeutung haben können. Gegebenenfalls können die Carbocyclen oder Heterocyclen der zuvor angegebenen Guanidinium-Kationen noch durch C₁- bis C₆-Alkyl, C₁- bis C₆-Alkenyl, NO₂, F, Cl, Br, I, OH, C₁-C₆-Alkoxy, CN, SCN, SCF₃, SO₂CF₃, C(O)O-C₁-C₆-Alkyl, NH₂, C₁-C₆-Alkylamino oder C₁-C₆-Dialkylamino, COOH, C(O)NR"₂, SO₂OR", SO₂NR"₂, SO₂X', SO₃H oder NHC(O)R" substituiert sein, wobei X' und R" eine zuvor angegebene Bedeutung haben, substituiertes oder unsubstituiertes Phenyl oder unsubstituierter oder substituierter Heterocyclus substituiert sein.

Bis zu vier Substituenten des Uroniumkations [(R¹R²N)-C(=OR⁷)(NR³R⁴)]⁺ oder des Thiouroniumkations [(R¹R²N)-C(=SR⁷)(NR³R⁴)]⁺ können auch paarweise derart verbunden sein, dass mono-, bi- oder polycyclische Kationen entstehen.
Ohne Einschränkung der Allgemeinheit sind Beispiele für solche Kationen im folgenden angegeben, wobei X = O oder S bedeutet: 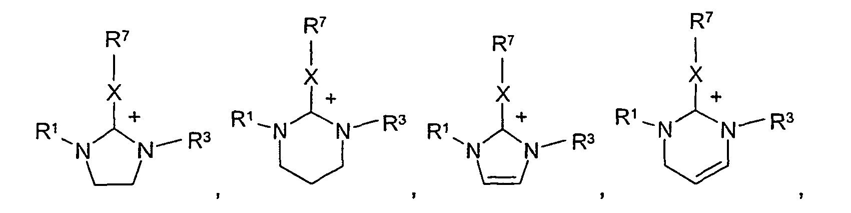 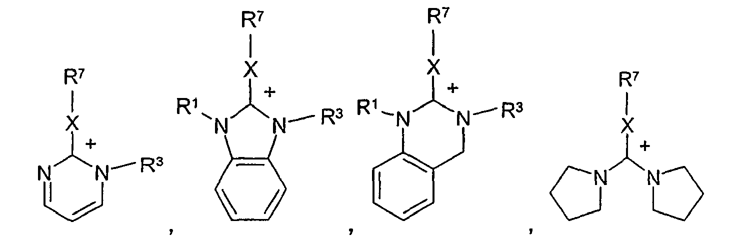 oder 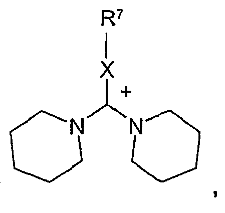 wobei die Substituenten R¹, R³ und R⁷ eine zuvor angegebene oder besonders bevorzugte Bedeutung haben können. Gegebenenfalls können die Carbocyclen oder Heterocyclen der zuvor angegebenen Kationen noch durch C₁- bis C₆-Alkyl, C₁- bis C₆-Alkenyl, NO₂, F, Cl, Br, I, OH, C₁-C₆-Alkoxy, CN, SCN, SCF₃, SO₂CF₃, C(O)O-C₁-C₆-Alkyl, NH₂, C₁-C₆-Alkylamino oder C₁-C₆-Dialkylamino, COOH, C(O)NR"₂, SO₂OR", SO₂NR"₂, SO₂X', SO₃H oder NHC(O)R" oder substituiertes oder unsubstituiertes Phenyl oder unsubstituierter oder substituierter Heterocyclus substituiert sein, wobei X' und R" eine zuvor angegebene Bedeutung haben.

Besonders bevorzugt wird das organische Kation aus der Gruppe der Ammonium-, Phosphonium- oder Guanidiniumsalze ausgewählt.

Die Substituenten R¹ bis R⁷ sind jeweils unabhängig voneinander bevorzugt eine geradkettige oder verzweigte Alkylgruppe mit 1 bis 10 C-Atomen.

Besonders bevorzugt sind R¹ bis R⁷ Methyl, Ethyl, Propyl, i-Propyl oder Butyl.

Besonders bevorzugt sind die Substituenten R¹ bis R⁴ der Formeln [NR¹R²R³R⁴]⁺ oder [PR¹R²R³R⁴]⁺ gleich.
Synthesebedingt ist eine Gruppe von Salzen bevorzugt, bei denen ein Substituent R¹, R², R³, R⁴, R⁵ oder R⁶ oder im Falle von Uronium und Thiouronium R⁷ gleich dem Substituenten R des Anions ist.

Das organische Kation kann weiterhin aus der Gruppe der heterocyclischen Kationen ausgewählt werden. Heterocyclische Kationen sind beispielsweise 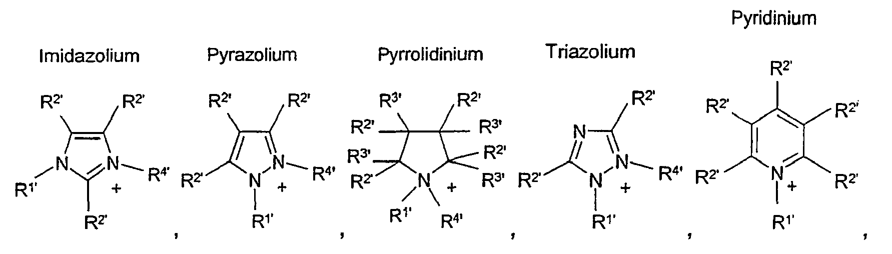 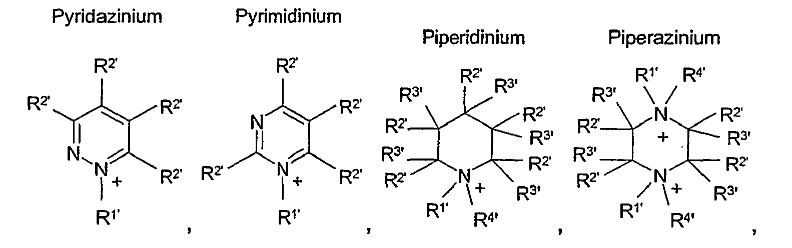 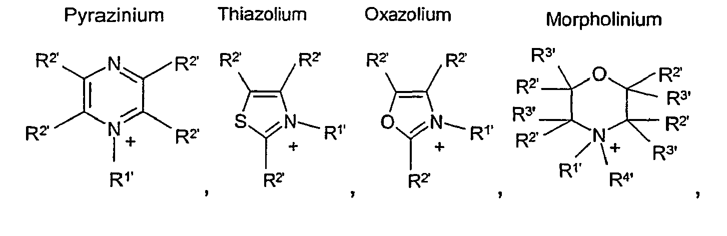 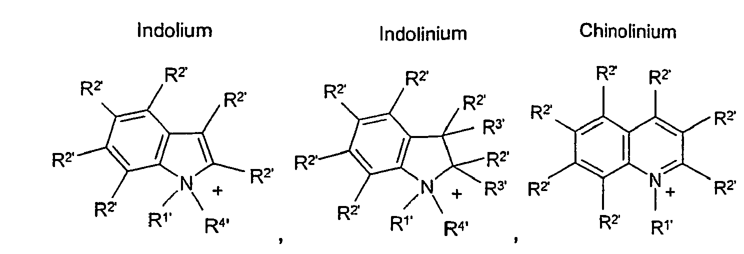 oder 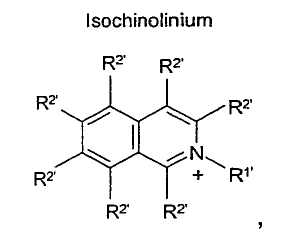 wobei die Substituenten
R¹_{,} bis R⁴_{,} jeweils unabhängig voneinander
Wasserstoff,
geradkettiges oder verzweigtes Alkyl mit 1-20 C-Atomen,
geradkettiges oder verzweigtes Alkenyl mit 2-20 C-Atomen und einer oder mehreren Doppelbindungen,
geradkettiges oder verzweigtes Alkinyl mit 2-20 C-Atomen und einer oder mehreren Dreifachbindungen,
gesättigtes, teilweise oder vollständig ungesättigtes Cycloalkyl mit 3-7 C-Atomen, das mit Alkylgruppen mit 1-6 C-Atomen substituiert sein kann, gesättigtes, teilweise oder vollständig ungesättigtes Heteroaryl, Heteroaryl-C₁-C₆-alkyl oder Aryl-C₁-C₆-alkyl bedeutet,
wobei ein oder mehrere Substituenten R¹_{,} bis R⁴' teilweise oder vollständig mit Halogenen, insbesondere -F und/oder -Cl, oder teilweise mit -CN oder-NO₂, substituiert sein können,
und wobei ein oder zwei nicht benachbarte und nicht in α-Position zum Heteroatom stehende Kohlenstoffatome der Substituenten R¹_{,} bis R⁴', durch Atome und/oder Atomgruppierungen ausgewählt aus der Gruppe -O-, -C(O)-, -C(O)O-, -S-, -S(O)-, -SO₂-, -SO₂O-, -N=, -N=N-, -NH-, -NR'-, -PR'-, -P(O)R'-, -P(O)R'-O-, -O-P(O)R'-O-, -P(O)(NR'₂)-NR'- und -PR'₂=N- mit R' = nicht, teilweise oder perfluoriertes C₁- bis C₆-Alkyl, C₃- bis C₇-Cycloalkyl, unsubstituiertes oder substituiertes Phenyl oder unsubstituierter oder substituierter Heterocyclus, ersetzt sein können.

Besonders bevorzugt sind die Substituenten R¹_{,} bis R⁴' eine geradkettige oder verzweigte Alkylgruppe mit 1 bis 20 C-Atomen, ganz besonders bevorzugt mit 1 bis 12 C-Atomen.
Synthesebedingt ist eine Gruppe von Verbindungen bevorzugt, bei denen ein Substituent R¹, oder R⁴, gleich dem Substituenten R der Anionkomponente ist. Weiterhin sind Salze der Formel (1) mit heterocyclischen Kationen, wie zuvor definiert bevorzugt, bei denen die Substituenten R¹, und R⁴' unterschiedlich sind.

Aus der Gruppe der heterocyclischen organischen Kationen werden besonders bevorzugt die Kationen substituiertes Imidazolium, substituiertes Pyridinium, substituiertes Pyrrolidinium, substituiertes Piperidinium oder substituiertes Morpholinium, wie zuvor definiert, ausgewählt.

Die erfindungsgemäßen Salze der Formel (1) mit organischen Kationen, wie zuvor beschrieben, können als ionische Flüssigkeiten verwendet werden. Ionische Flüssigkeiten können beispielsweise als Lösungsmittel für viele synthetische oder katalytische Reaktionen eingesetzt werden, z.B. Friedel-Crafts-Acylierung und -Alkylierung, Diels-Alder-Cycloadditionen, Hydrogenierungs- und Oxidationsreaktionen, Michael-Typ-Reaktionen oder Heck-Reaktionen, als nichtwässrige Elektrolyte, die gegebenenfalls in Kombination mit anderen, dem Fachmann bekannten Leitsalzen, Zusatzstoffen und Lösungsmitteln eingesetzt werden.

Daneben können die erfindungsgemäßen ionischen Flüssigkeiten als nichtwässrige polare Substanzen in geeigneten Reaktionen als Phasentransferkatalysator, als Sufactant (surface active agent = grenzflächenaktive Stoffe) oder als Medium zur Heterogenisierung von homogenen Katalysatoren verwendet werden.

Sie sind weiterhin geeignet als Trocknungsmittel und als Trennmittel für Gase.

Ein zweiter Gegenstand der vorliegenden Erfindung ist ein Verfahren zur Herstellung der erfindungsgemäßen Salze der Formel (1), dadurch gekennzeichnet, dass ein Dialkyloxonium-tris(fluoralkyl)borat der Formel (2)

(R)₂O-B(R^{F})₃ (2)

wobei R und R^{F} eine bei den Verbindungen der Formel (1) angegebene Bedeutung haben, mit einem anorganischen Salz, enthaltend das Metallkation M^{a+}, wie zuvor beschrieben, oder mit einer alkylierbaren organischen Verbindung, beispielsweise einem Amin, Phosphin, Guanidin, Harnstoff, Thioharnstoff oder einem Heterocyclus, entsprechend den Kationen, wie zuvor beschrieben, umgesetzt wird.

Geeignete anorganische Salze zur Herstellungen der Verbindungen der Formel (1), in denen M^{a+} ein Alkalimetallkation oder ein Kation aus der Gruppe Silber, Magnesium, Kupfer, Zink oder Calcium ist, sind beispielsweise
Na₂CO₃, K₂CO₃, KOH, NaOH, Ag₂O, Ag₂CO₃, MgCO₃, KCI, CuO, ZnCO₃ oder Ca(CO₂CH₃)₂.

Vorzugsweise wird die Umsetzung in einem organischen Lösungsmittel, beispielsweise Dichlormethan, Dialkylether, beispielsweise Diethylether, Ethylacetat, Wasser oder Alkohol, beispielsweise Methanol oder Ethanol, bei einer Temperatur zwischen 0°C und 100°C, vorzugsweise zwischen 10° und 80°C, besonders bevorzugt bei Raumtemperatur, durchgeführt.

Geeignete alkylierbare organische Ausgangsstoffe zur Synthese von Verbindungen der Formel (1) mit organischen Kationen sind [NR¹R²R³], [PR¹R²R³], [P(NR¹R²)₂(NR³R⁴)], [C(NR¹R²)(=NR⁴)(NR⁵R⁶)], [(R¹R²N)-C(=O)(NR³R⁴)] oder [(R¹R²N)-C(=S)(NR³R⁴)], sowie beispielsweise die heterocyclischen Verbindungen 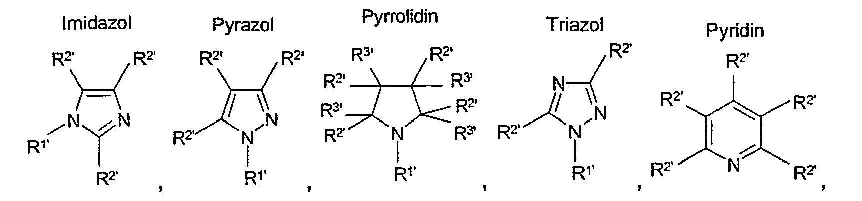 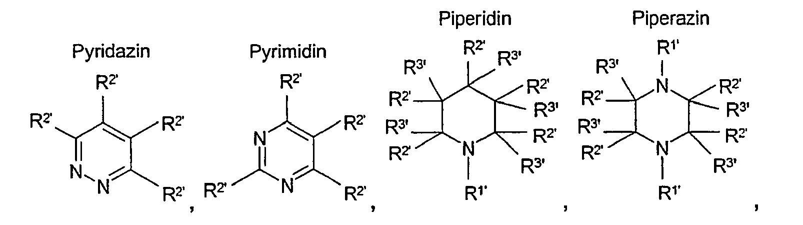 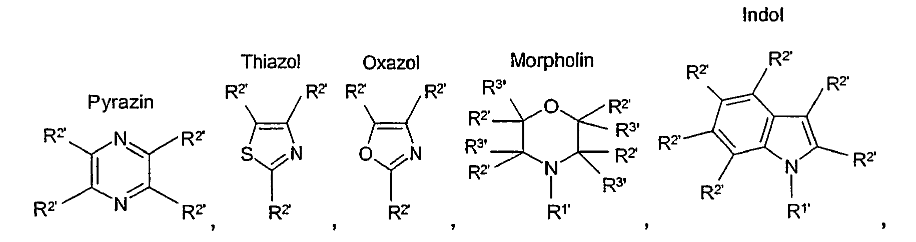 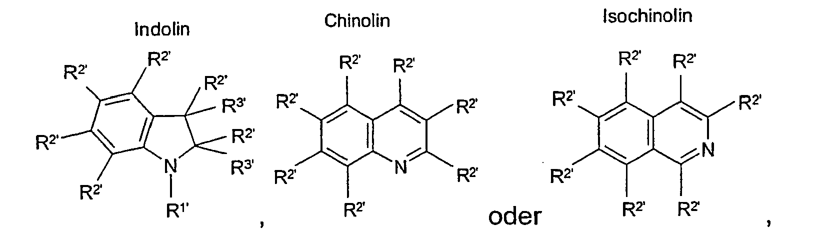 wobei die Substituenten
R¹ bis R⁶ und R¹' bis R⁴_{,} wie zuvor bei den Kationen definiert sind.

Vorzugsweise wird die Umsetzung unter Inertgasbedingungen in einem organischen Lösungsmittel, beispielsweise Dichlormethan, Dialkylether, beispielsweise Diethylether, Ethylacetat, Nitromethan oder Acetonitril, bei einer Temperatur zwischen 0°C und 100°C, vorzugsweise zwischen 10° und 80°C, besonders bevorzugt bei Raumtemperatur, durchgeführt.
Aus diesem Alkylierungsverfahren werden zwangsläufig Vebindungen der Formel (1) mit einem organischen Kation erhalten, wobei ein Substituent, je nach Ausgangsstoff, beispielsweise R⁴ der Phosphonium- oder Ammoniumkationen, R⁷ der Uronium- oder Thiouroniumkationen, oder R¹_{,} oder R⁴' der hetrocyclischen Kationen, gleich dem Sustituenten R der Anionenkomponente ist.

Die Dialkyloxonium-tris(fluoralkyl)borate der Formel (2)

(R)₂O-B(R^{F})₃ (2),

wobei R und R^{F} eine bevorzugte oder besonders bevorzugte Bedeutung haben, wie bei den Verbindungen der Formel (1) angegeben, sind neu. Dialkyloxonium-tris(fluoralkyl)borate sind stabil bei Raumtemperatur und sind hervorragende Alkylierungsmittel. Eine Anwendung dieser Verbindungen liegt in der Synthese der Verbindungen der Formel (1). Sie können jedoch als allgemeine Alkylierungsmittel auch bei anderen organischen Synthesen eingesetzt werden.

Gegenstand der Erfindung sind daher auch Verbindungen der Formel (2)

(R)₂O-B(R^{F})₃ (2),

worin
- R: geradkettiges oder verzweigtes Alkyl mit 1 bis 10 C-Atomen, Aryl oder Aryl-C₁-C₆-alkyl und
- R^{F}: jeweils unabhängig voneinander fluoriertes geradkettiges oder verzweigtes Alkyl mit 1 bis :20 C-Atomen, fluoriertes geradkettiges oder verzweigtes C₁-C₆-Alkyl-ary) oder fluoriertes Aryl-C₁-C₆-alkyl bedeutet.

In Verbindungen der Formel (2) ist R bevorzugt ein geradkettiges oder verzweigtes Alkyl mit 1 bis 6 C-Atomen; R^{F} ist bevorzugt perfluoriertes Alkyl mit 1 bis 6 C-Atomen. Bevorzugt sind die Substituenten R^{F} gleich.

Dialkyloxonium-tris(fluoralkyl)borate der Formel (2) werden durch Umsetzung eines Tris(fluoralkyl)borcarbonyls der Formel (3)

(R^{F})₃BCO (3),

wobei R^{F} jeweils unabhängig voneinander eine bei Formel (1) angegebene Bedeutung hat,
mit einem Dialkylether der Formel (4)

(R)₂O (4),

wobei R jeweils unabhängig voneinander eine bei Formel (1) angegebene Bedeutung hat,
erhalten.

Carbonyltris(trifluormethyl)boran und ein Verfahren zur Herstellung ist aus J. Am. Chem. Soc, 2002, 51, 15385 oder Angew. Chem. 2002, 114, 823 bekannt. Die weiteren Tris(fluoralkyl)borcarbonyle der Formel (3) sind analog zu Carbonyltris(trifluormethyl)boran herstellbar.

Der Dialkylether wird vorzugsweise zu dem Borcarbonyl bei Temperaturen zwischen -200° und 25°C kondensiert oder bei Raumtemperatur zum Borcarbonyl in einem geeigneten Lösungsmittel zugegeben. Danach wird die Reaktionsmischung auf Temperaturen zwischen 10° und 40°, besonders bevorzugt auf Raumtemperatur, erwärmt und bei dieser Temperatur 10 bis 14 Stunden gerührt.
Eine Aufreinigung des gewünschten Produktes kann mit herkömmlichen Methoden stattfinden, wie sie dem Fachmann bekannt sind. Bevorzugt wird durch Umkristallisation gereinigt.

Erfindungsgemäß können bei der Alkylierung die Reagentien mit einem Mengenverhältnis bis zum fünffachen Überschuss eines der Reaktanden, insbesondere des Alkylierungsmittels, umgesetzt werden. Bevorzugt werden die Reaktanden jedoch in äquimolarer Menge eingesetzt.

Auftretende Nebenprodukte sind beispielsweise die Produkte [(R)₃O]⁺ [(R^{F})₃BOR]⁻, [(R)₃O]⁺ [(R^{F})₃BC(O)OR]⁻ und/oder (R^{F})₃BC(OR)₂, wobei die Substituenten R und R^{F} eine bei Formel (1) angegebene Bedeutung haben.

Diese Nebenprodukte sind ebenfalls starke Alkylierungsmittel.

Gegenstand der Erfindung ist weiterhin ein Verfahren zur Herstellung von Verbindungen der Formel (1), wobei M^{a+} ein organisches Kation ist, ohne die Einschränkung, dass ein Substituent des organischen Kations identisch zu einem Substituenten R der Anionkomponente ist, dadurch gekennzeichnet, dass
eine Verbindung der Formel (1),

M^{a+} [RO-B(R^{F})₃]ₐ (1)

worin
- M^{a+}: ein Alkalimetallkation, ein Silber-, Magnesium-, Kupfer-, Zink- oder Calciumkation bedeutet, gegebenenfalls in solvatisierter Form,
- R: geradkettiges oder verzweigtes Alkyl mit 1 bis 10 C-Atomen, Aryl oder Aryl-C₁-C₆-alkyl und
- R^{F}: jeweils unabhängig voneinander fluoriertes geradkettiges oder verzweigtes Alkyl mit 1 bis 20 C-Atomen, fluoriertes geradkettiges oder verzweigtes C₁-C₆-Alkyl-aryl oder fluoriertes Aryl-C₁-C₆-alkyl bedeutet,
mit einer Verbindung der Formel (5)

MX (5),

worin
M ein organisches Kation ist, wie zuvor definiert definiert und das Anion X F⁻, Cl⁻, Br⁻, I⁻, [HF₂]⁻, [CN]⁻, [SCN] ⁻, [CH₃COO]⁻, [CH₃SO₃]⁻, [CF₃COO]⁻, [CF₃SO₃]⁻, [CH₃OSO₃]⁻, [SiF₆]²⁻, [BF₄]⁻, [SO₄]²⁻ , [NO₃]⁻, [C₂H₅OSO₃]⁻, [(C₂F₅)₂P(O)O]⁻ ,[C₂F₅P(O)O₂]²⁻, Tosylate, Malonate, substituierte Malonate oder [CO₃]²⁻ bedeutet, wobei in der Formel des Salzes MX die Elektroneutralität zu beachten ist,
umgesetzt wird.

Vorzugsweise ist das Anion der Formel (5) F⁻, Cl⁻, Br⁻, I⁻, [HF₂]⁻, [CH₃SO₃]⁻ [CH₃OSO₃]⁻ [CF₃COO]⁻ [CF₃SO₃]⁻ [(C₂F₅)₂P(O)O]⁻ oder [CO₃]²⁻, besonders bevorzugt Cl⁻, Br⁻, [CH₃OSO₃]⁻, [CF₃SO₃]⁻ oder [(C₂F₅)₂P(O)O]⁻.

Die Reaktion wird vorteilhaft in Wasser durchgeführt, wobei Temperaturen von 10°-100°C, bevorzugt 15°-60°C, besonders bevorzugt bei Raumtemperatur, geeignet sind.

Die Reaktion kann jedoch alternativ auch in organischen Lösungsmitteln bei Temperaturen zwischen 10° und 100°C stattfinden. Geeignete Lösungsmittel sind hier Benzol, Acetonitril, Dioxan, Dichlormethan, Dimethoxyethan oder Alkohol, beispielsweise Methanol oder Ethanol.

Die vollständige Offenbarung aller vor- und nachstehend aufgeführten Anmeldungen, Patente und Veröffentlichungen ist durch Bezugnahme in diese Anmeldung eingeführt.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

Die NMR-Spektren wurden an Lösungen in deuterierten Lösungsmitteln bei 20°C an einem Bruker Avance 300 Spektrometer mit einem 5 mm Breitbandkopf ¹H/BB mit Deuterium Lock gemessen, falls nicht in den Beispielen angegeben. Die Messfrequenzen der verschiedenen Kerne sind: ¹H: 300,13 MHz, ¹¹B: 96,92 MHz, ¹⁹F: 282,41 MHz und ³¹P: 121,49 MHz. Die Methode der Referenzierung wird bei jedem Spektrum bzw. bei jedem Datensatz separat angegeben.

### Beispiel 1:

### Synthese von Dimethyloxonium-tris(trifluormethyl)borat, (CH₃)₂OB(CF₃)₃

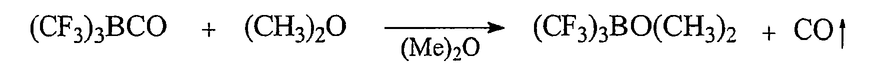

Zu 2,75 g (11,2 mmol) Tris(trifluormethyl)borcarbonyl, (CF₃)₃BCO, werden bei -196°C 5 ml Dimethylether einkondensiert. Die Reaktionsmischung erwärmt sich auf Raumtemperatur und wird über Nacht weiter gerührt. Die flüchtigen Bestandteile werden im Vakuum abdestilliert. Man erhält 2,74 g eines Feststoffs, der zu 95,9 % aus (CF₃)₃BO(CH₃)₂ besteht. Das Rohprodukt kann durch Umkristallisierung aus einer Mischung Dichlormethan/Pentan von Nebenprodukten befreit werden. Die Ausbeute beträgt bezogen auf Tris(trifluormethyl)borcarbonyl 89 %.

| Elementaranalyse: | |
|---|---|
| gefunden: | C 22.41, H 2.24; |
| berechnet (C₅H₆BF₉O): | C 22.76, H 2.29. |

¹H-NMR (CD₂Cl₂, Referenz: TMS), δ [ppm]: 3.87 br.s.
¹¹B-NMR (CD₂Cl₂, Referenz. BF₃·OEt₂ extern), δ [ppm]: -5.1.
¹⁹F-NMR (CD₂Cl₂, Referenz: CFCl₃), δ [ppm]: -64.2 s.
¹³C-NMR of (CF₃)₃BO(CD₃)₂ (CD₂Cl₂, Referenz: TMS), δ [ppm]: 72.0 (CD₃), 128.1 (CF₃).

### Beispiel 2:

### Synthese von 1-Butyl-3-methylimidazolium methoxytris(trifluormethyl)borat

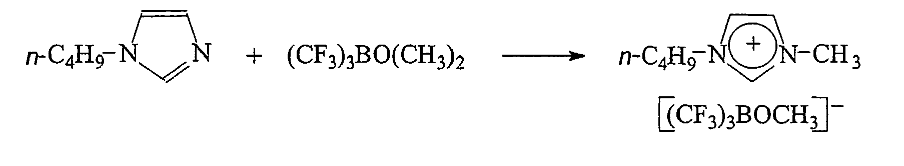

Zu einer Lösung von 0,448 g (1,70 mmol) Dimethyloxonium-tris(trifluormethyl)borat in 3 ml trockenem Dichlormethan werden unter Rühren in Inertgasatmosphäre 0,211 g (1,70 mmol) 1-n-Butylimidazol zugegeben. Die Reaktionsmischung wird über Nacht bei Raumtemperatur gerührt und anschließend werden die flüchtigen Produkte im Vakuum abdestilliert. Man erhält 0,66 g flüssiges 1-Butyl-3-methylimidazolium methoxytris(trifluormethyl)borat (Smp. < 20 °C). Die Ausbeute ist annähernd quantitativ.

| Elementaranalyse: | |
|---|---|
| gefunden: | C 36.89, H 4.95; N 7.49 |
| berechnet (C₁₂H₁₈BF₉N₂O): | C 37.14, H 4.68; N 7.22. |

¹H-NMR (CD₃CN, Referenz: TMS), δ [ppm]: 0.94 t (3H, CH₃), 1.26 - 1.40 m (2H, CH₂), 1.76 - 1.86 m (2H, CH₂), 3.33 br. s (3H, OCH₃), 3.82 s (3H, NCH₃), 4.12 t (2H, NCH₂), 7.29 - 7.41 m (2H), 8.43 s (1H).
¹¹B-NMR (CD₃CN, Referenz: BF₃·OEt₂ extern), δ [ppm]: -9.5.
¹⁹F-NMR (CD₃CN, Referenz: CFCl₃), δ [ppm]: -65.1s.

### Beispiel 3:

### Synthese von Tri-n-butyl-methylphosphonium methoxytris(trifluormethyl)borat

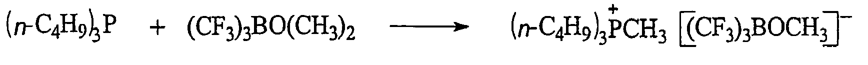

Zu einer Lösung von 0,360 g (1,36 mmol) Dimethyloxonium-tris(trifluormethyl)borat in 3 ml trockenem Dichlormethan, werden unter Rühren in Inertgasatmosphäre 0,276 g (1,36 mmol) Tri-n-Butylphosphin in 3 ml trockenem Dichlormethan zugegeben. Die Reaktionsmischung wird über Nacht bei Raumtemperatur gerührt und anschließend werden die flüchtigen Produkte im Vakuum abdestilliert. Man erhält 0,643 g Tri-n-butyl-methylphosphonium methoxytris(trifluormethyl)borat (Smp. 63°C). Die Ausbeute ist annähernd quantitativ.

| Elementaranalyse: | |
|---|---|
| gefunden: | C 44.03, H 7.08; |
| berechnet (C₁₇H₃₃BF₉OP): | C 43.80, H 7.13. |

¹H-NMR (CD₃CN, Referenz: TMS), δ [ppm]: 0.95 t (9H, CH₃), 1.35- 1.60 m (12H, 6CH₂), 1.68 d (3H, PCH₃), 1.98 - 2.13 m (6H, 3CH₂), 3.33 br. s (3H, OCH₃), ²*J*_{P,H} = 13.5 Hz.
¹¹B-NMR (CD₃CN, Referenz. BF₃·OEt₂ extern), δ [ppm]: -9.5.
¹⁹F-NMR (CD₃CN, Referenz: CFCl₃), δ [ppm]: -65.1 s.

### Beispiel 4:

### Synthese von Kaliummethoxytris(trifluormethyl)borat (CF₃)₃BO(CH₃)₂ + K₂CO₃ + H₂O → K⁺[(CF₃)₃BOCH₃]⁻ + KHCO₃ + CH₃OH

Zu einer Lösung von 1,09 g (4,13 mmol) Dimethyloxonium-tris(trifluormethyl)borat in 10 ml Dichlormethan, werden unter Rühren bei Raumtemperatur 5 ml einer konzentrierten wässrigen Kaliumcarbonatlösung zugegeben. Die Reaktionsmischung wird eine Stunde gerührt und drei mal mit 150 ml, 100 ml und 50 ml Diethylether extrahiert. Der Extrakt wird über K₂CO₃ getrocknet. Nach Abfiltrieren des Feststoffs wird das Lösungsmittel im Vakuum abdestilliert. Man erhält 1,11 g Kaliummethoxytris(trifluormethyl)borat, das entspricht einer Ausbeute von 93,3%.

| Elementaranalyse: | |
|---|---|
| gefunden: | C 16.99, H 1.05; |
| berechnet (C₄H₃BF₉OK): | C 16.68, H 1.05. |

¹H-NMR (CD₃CN, Referenz: TMS), δ [ppm]: 3.33 br.s.
¹¹B-NMR (CD₃CN, Referenz. BF₃·OEt₂ extern), δ [ppm]: -9.5.
¹⁹F-NMR (CD₃CN, Referenz: CFCl₃), δ [ppm]: -65.1 s.
¹³C-NMR of K [(CF₃)₃BOCD₃] (CD₃CN, Referenz: TMS), δ [ppm]: 51.3 (CD₃), 133.6 (CF₃).

### Beispiel 5:

### Synthese von Tetra-n-butylammonium methoxytris(trifluormethyl)borat (n-C₄H₉)₄N⁺Cl⁻ + K⁺[CF₃)₃BOCH₃]⁻ → (n-C4H₉)₄N⁺[CF₃)₃BOCH₃⁻]⁻ + KCl

Zu einer Lösung von 0,245 g (0,85 mmol) Kaliummethoxytris(trifluormethyl)borat in 5 ml Wasser werden 0,215 g (0,78 mmol) Tetra-n-butylammoniumchlorid in 5 ml Wasser zugegeben. Nach zwei Stunden wird der Niederschlag abfiltriert und mit 50 ml Wasser gewaschen sowie im Vakuum getrocknet. Man erhält 0,359 g Tetra-n-butylammonium methoxytris(trifluormethyl)borat (Smp 134°C), das entspricht einer Ausbeute von 94,2 %.

| Elementaranalyse: | |
|---|---|
| gefunden: | C 48.92, H 7.96, N 2.85; |
| berechnet (C₂₀H₃₉BF₉NO): | C 48.89, H 8.00, N 2.85. |

¹H-NMR (CD₃CN, Referenz: TMS), δ [ppm]: 0.97 t (12H, 4CH₃), 1.28 - 1.42 m (8H, 4CH₂), 1.53 - 1.66 m (8H, 4CH₂), 3.02 - 3.12 m (8H, 4CH₂), 3.33 br. s (3H, OCH₃).
¹¹B-NMR (CD₃CN, Referenz. BF₃·OEt₂ extern), δ [ppm]: -9.5.
¹⁹F-NMR (CD₃CN, Referenz: CFCl₃), δ [ppm]: -65.1 s.

## Patentansprüche

1. Alkoxytris((per)fluoralkyl)borat-Salze der Formel (1)
M^{a+} [RO-B(R^{F})₃]ₐ (1)
worin,
M^{a+} ein- oder zweiwertiges Kation,
a 1 oder 2,
R geradkettiges oder verzweigtes Alkyl mit 1 bis 10 C-Atomen, Aryl oder Aryl-C₁-C₆-alkyl und
R^{F} jeweils unabhängig voneinander fluoriertes geradkettiges oder verzweigtes Alkyl mit 1 bis 20 C-Atomen, fluoriertes geradkettiges oder verzweigtes C₁-C₆-Alkyl-aryl oder fluoriertes Aryl-C₁-C₆-alkyl bedeutet.

2. Verbindungen der Formel (1) nach Anspruch 1, **dadurch gekennzeichnet, dass** M^{a+} ein Alkalimetallkation ist.

3. Verbindungen der Formel (1) nach Anspruch 1, **dadurch gekennzeichnet, dass** M^{a+} ein Silber-, Magnesium-, Kupfer(I)-, Kupfer(II)-, Zink(II)- oder Calcium(II)-Kation ist.

4. Verbindungen der Formel (1) nach Anspruch 1, **dadurch gekennzeichnet, dass** M^{a+} ein organisches Kation ist.

5. Verbindungen der Formel (1) nach Anspruch 4, **dadurch gekennzeichnet, dass** das organische Kation ausgewählt wird aus der Gruppe [NR¹R²R³R⁴]⁺, [PR¹R²R³R⁴]⁺, [P(NR¹R²)₂(NR³R⁴)₂]⁺, [C(NR¹R²)(NR³R⁴)(NR⁵R⁶)]⁺, [(R¹R²N)-C(=OR⁷)(NR³R⁴)]⁺ oder [(R¹R²N)-C(=SR⁷)(NR³R⁴)]⁺, worin
R¹ bis R⁷ jeweils unabhängig voneinander
Wasserstoff,
geradkettiges oder verzweigtes Alkyl mit 1 bis 20 C-Atomen, geradkettiges oder verzweigtes Alkenyl mit 2-20 C-Atomen und einer oder mehreren Doppelbindungen,
geradkettiges oder verzweigtes Alkinyl mit 2-20 C-Atomen und einer oder mehreren Dreifachbindungen,
gesättigtes, teilweise oder vollständig ungesättigtes Cycloalkyl mit 3-7 C-Atomen, das mit Alkylgruppen mit 1-6 C-Atomen substituiert sein kann, bedeutet,
wobei ein oder mehrere der Substituenten R¹ bis R⁷ teilweise oder vollständig mit Halogenen, insbesondere -F und/oder -Cl, oder teilweise mit -CN oder -NO₂, substituiert sein können
und wobei ein oder zwei nicht benachbarte und nicht α-ständige Kohlenstoffatome der Substituenten R¹ bis R⁶ durch Atome und/oder Atomgruppierungen ausgewählt aus der Gruppe -O-, -C(O)-, -C(O)O-, - S-, -S(O)-, , -SO₂- , -SO₂O- -N=, -N=N-, -NH-, -NR'-, -PR'-, -P(O)R'-, - P(O)R'-O-, -O-P(O)R'-O-, -P(O)(NR'₂)-NR'- und -PR'₂=N- mit R' = nicht, teilweise oder perfluoriertes C₁- bis C₆-Alkyl, C₃- bis C₇-Cycloalkyl, unsubstituiertes oder substituiertes Phenyl oder unsubstituierter oder substituierter Heterocyclus, ersetzt sein können.

6. Verbindungen der Formel (1) nach Anspruch 4, **dadurch gekennzeichnet, dass** das organische Kation ein heterocyclisches Kation ist und ausgewählt wird aus der Gruppe 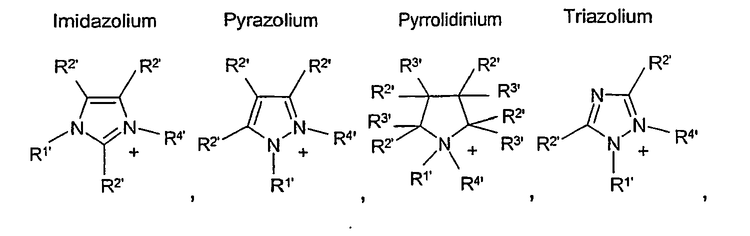 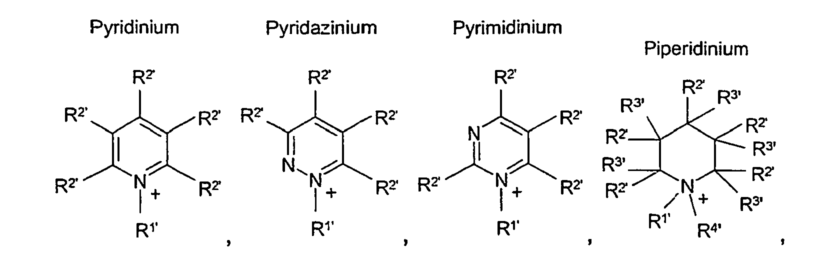 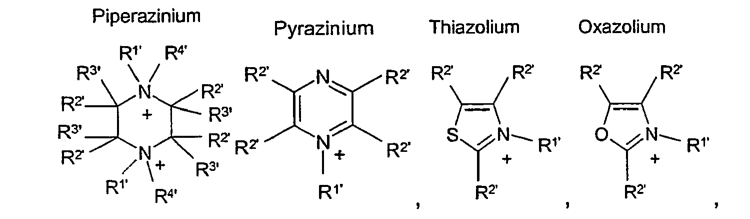 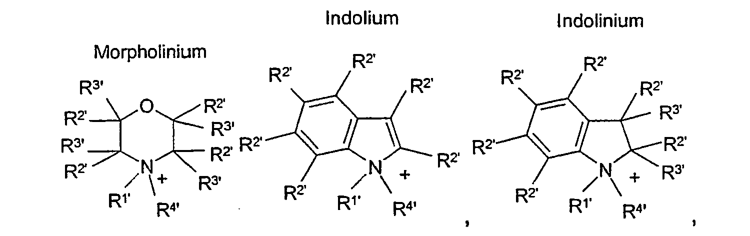 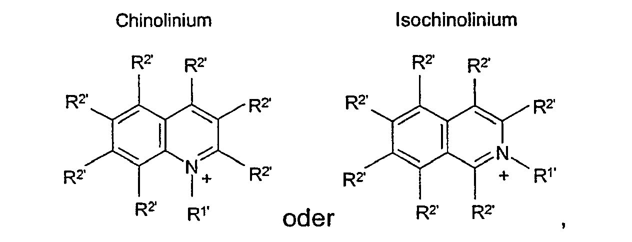 wobei die Substituenten
R¹_{,} bis R⁴_{,} jeweils unabhängig voneinander
Wasserstoff,
geradkettiges oder verzweigtes Alkyl mit 1-20 C-Atomen,
geradkettiges oder verzweigtes Alkenyl mit 2-20 C-Atomen und einer oder mehreren Doppelbindungen,
geradkettiges oder verzweigtes Alkinyl mit 2-20 C-Atomen und einer oder mehreren Dreifachbindungen,
gesättigtes, teilweise oder vollständig ungesättigtes Cycloalkyl mit 3-7 C-Atomen, das mit Alkylgruppen mit 1-6 C-Atomen substituiert sein kann,
gesättigtes, teilweise oder vollständig ungesättigtes Heteroaryl, Heteroaryl-C₁-C₆-alkyl oder Aryl-C₁-C₆-alkyl bedeutet,
wobei ein oder mehrere Substituenten R¹_{,} bis R^{4,} teilweise oder vollständig mit Halogenen, insbesondere -F und/oder -Cl, oder teilweise mit -CN oder -NO₂, substituiert sein können,
und wobei ein oder zwei nicht benachbarte und nicht in α-Position zum Heteroatom stehende Kohlenstoffatome der Substituenten R¹_{,} bis R^{4,}, durch Atome und/oder Atomgruppierungen ausgewählt aus der Gruppe - O-, -C(O)-, -C(O)O-, -S-, -S(O)-, -SO₂-, -SO₂O-, -N=, -N=N-, -NH-, -NR'-, -PR'-, -P(O)R'-, -P(O)R'-O-, -O-P(O)R'-O-, -P(O)(NR'₂)-NR'- und-PR'₂=N- mit R' = nicht, teilweise oder perfluoriertes C₁- bis C₆-Alkyl, C₃- bis C₇-Cycloalkyl, unsubstituiertes oder substituiertes Phenyl oder unsubstituierter oder substituierter Heterocyclus, ersetzt sein können.

7. Verbindungen nach einem oder mehreren der Ansprüche 1 bis 6, **dadurch gekennzeichnet, dass** der Substituent R im Anion eine geradkettige oder verzweigte Alkylgruppe mit 1 bis 10 C-Atomen ist.

8. Verbindungen nach einem oder mehreren der Ansprüche 1 bis 7, **dadurch gekennzeichnet, dass** der Substituent R^{F} im Anion eine perfluorierte geradkettige oder verzweigte Alkylgruppe mit 1 bis 20 C-Atomen ist.

9. Verfahren zur Herstellung der Salze der Formel (1) nach einem oder mehreren der Ansprüche 1 bis 8, **dadurch gekennzeichnet, dass** ein Dialkyloxonium-tris(fluoralkyl)borat der Formel (2)
(R)₂O-B(R^{F})₃ (2)
wobei
R geradkettiges oder verzweigtes Alkyl mit 1 bis 10 C-Atomen, Aryl oder Aryl-C₁-C₆-alkyl und
R^{F} jeweils unabhängig voneinander fluoriertes geradkettiges oder verzweigtes Alkyl mit 1 bis 20 C-Atomen, fluoriertes geradkettiges oder verzweigtes C₁-C₆-Alkyl-aryl oder fluoriertes Aryl-C₁-C₆-alkyl bedeutet, mit einem
a) anorganischen Salz, enthaltend ein Metallkation M^{a+} oder
b) mit einer alkylierbaren organischen Verbindung, umgesetzt wird.

10. Verbindungen der Formel (2)
(R)₂O-B(R^{F})₃ (2),
worin
R geradkettiges oder verzweigtes Alkyl mit 1 bis 10 C-Atomen, Aryl oder Aryl-C₁-C₆-alkyl und
R^{F} jeweils unabhängig voneinander fluoriertes geradkettiges oder verzweigtes Alkyl mit 1 bis 20 C-Atomen, fluoriertes geradkettiges oder verzweigtes C₁-C₆-Alkyl-aryl oder fluoriertes Aryl-C₁-C₆-alkyl bedeutet.

11. Verfahren zur Herstellung von Verbindungen der Formel (2),
**dadurch gekennzeichnet, dass**
ein Tris(fluoralkyl)borcarbonyl der Formel (3)
(R^{F})₃BCO (3),
wobei R^{F} jeweils unabhängig voneinander fluoriertes geradkettiges oder verzweigtes Alkyl mit 1 bis 20 C-Atomen, fluoriertes geradkettiges oder verzweigtes C₁-C₆-Alkyl-aryl oder fluoriertes Aryl-C₁-C₆-alkyl bedeutet, mit einem Dialkylether der Formel (4)
(R)₂O (4),
wobei R jeweils unabhängig voneinander geradkettiges oder verzweigtes Alkyl mit 1 bis 10 C-Atomen, Aryl oder Aryl-C₁-C₆-alkyl bedeutet, umgesetzt wird.

12. Verwendung der Verbindungen der Formel (2) nach Anspruch 10 als Alkylierungsmittel.

13. Verfahren zur Herstellung von Verbindungen der Formel (1) nach einem oder mehreren der Ansprüche 1 bis 8, wobei M^{a+} ein organisches Kation ist, ohne die Einschränkung, dass ein Substituent des organischen Kations identisch zu einem Substituenten R der Anionkomponente ist, **dadurch gekennzeichnet, dass**
eine Verbindung der Formel (1),
M^{a+} [RO-B(R^{F})₃]ₐ (1)
worin
M^{a+} ein Alkalimetallkation, ein Silber-, Magnesium-, Kupfer-, Zink- oder Calciumkation bedeutet,
a 1 oder 2,
R geradkettiges oder verzweigtes Alkyl mit 1 bis 10 C-Atomen, Aryl oder Aryl-C₁-C₆-alkyl und
R^{F} jeweils unabhängig voneinander fluoriertes geradkettiges oder verzweigtes Alkyl mit 1 bis 20 C-Atomen, fluoriertes geradkettiges oder verzweigtes C₁-C₆-Alkyl-aryl oder fluoriertes Aryl-C₁-C₆-alkyl bedeutet,
mit einer Verbindung der Formel (5)
MX (5),
worin
M ein organisches Kation ist und
das Anion X F⁻, Cl⁻, Br⁻, I⁻, [HF₂]⁻, [CN]⁻, [SCN]⁻, [CH₃COO]⁻, [CH₃SO₃]⁻, [CF₃COO]⁻, [CF₃SO₃]⁻, [CH₃OSO₃]⁻ , [SiF₆]²⁻ , [BF₄]⁻, [SO₄]²⁻, [NO₃]⁻; [C₂H₅OSO₃]⁻ [(C₂F₅)₂P(O)O]⁻, [C₂F₅P(O)O₂]²⁻ , Tosylate, Malonate, substituierte Malonate oder [CO₃]²⁻ bedeutet,
umgesetzt wird.

14. Verwendung eines Salzes der Formel (1) nach einem oder mehreren der Ansprüche 1 und 4 bis 8 als ionische Flüssigkeit.

## Claims

1. Alkoxytris((per)fluoroalkyl)borate salts of the formula (1)
M^{a+} [RO-B(R^{F})₃]ₐ (1)
in which
M^{a+} denotes a mono- or divalent cation,
a denotes 1 or 2,
R denotes straight-chain or branched alkyl having 1 to 10 C atoms, aryl or aryl-C₁-C₆-alkyl and
R^{F} in each case, independently of one another, denotes fluorinated straight-chain or branched alkyl having 1 to 20 C atoms, fluorinated straight-chain or branched C₁-C₆-alkylaryl or fluorinated aryl-C₁-C₆-alkyl.

2. Compounds of the formula (1) according to Claim 1, **characterised in that** M^{a+} is an alkali metal cation.

3. Compounds of the formula (1) according to Claim 1, **characterised in that** M^{a+} is a silver, magnesium, copper(I), copper(II), zinc(II) or calcium(II) cation.

4. Compounds of the formula (1) according to Claim 1, **characterised in that** M^{a+} is an organic cation.

5. Compounds of the formula (1) according to Claim 4, **characterised in that** the organic cation is selected from the group [NR¹R²R³R⁴], [PR¹R²R³R⁴]⁺, IP(NR¹R²)₂(NR³R⁴)₂]⁺, [C(NR¹R²)(NR³R⁴)(NR⁵R⁶)]⁺, [(R¹R²N)-C(=OR⁷)(NR³R⁴)]⁺ or [(R¹R²N)-C(=SR⁷)(NR³R⁴)]⁺, in which
R¹ to R⁷ each, independently of one another, denote
hydrogen,
straight-chain or branched alkyl having 1 to 20 C atoms,
straight-chain or branched alkenyl having 2-20 C atoms and one or more double bonds,
straight-chain or branched alkynyl having 2-20 C atoms and one or more triple bonds,
saturated, partially or fully unsaturated cycloalkyl having 3-7 C atoms, which may be substituted by alkyl groups having 1-6 C atoms,
where one or more of the substituents R¹ to R⁷ may be partially or fully substituted by halogens, in particular -F and/or -Cl, or partially by -CN or -NO₂
and where, in the substituents R¹ to R⁶, one or two non-adjacent carbon atoms which are not in the α-position may be replaced by atoms and/or atom groups selected from the group -O-, -C(O)-, -C(O)O-, -S-, -S(O)-, -SO₂-, -SO₂O-, -N=, -N=N-, -NH-, -NR'-, -PR'-, -P(O)R'-, -P(O)R'-O-, -O-P(O)R'-O-, -P(O)(NR'₂)-NR'- and -PR'₂=N-, where R' = non-, partially or perfluorinated C₁- to C₆-alkyl, C₃- to C₇-cycloalkyl, unsubstituted or substituted phenyl or an unsubstituted or substituted heterocycle.

6. Compounds of the formula (1) according to Claim 4, **characterised in that** the organic cation is a heterocyclic cation and is selected from the group 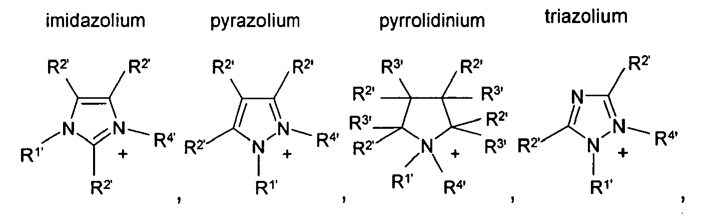 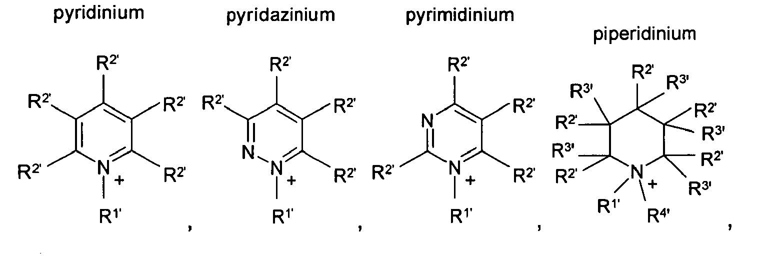 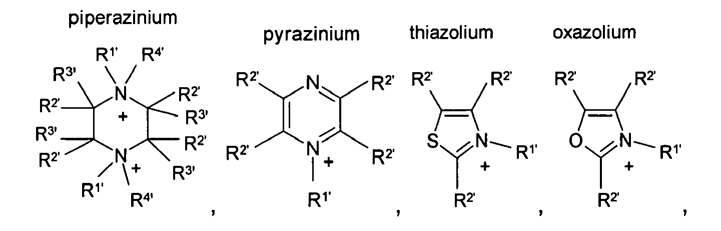 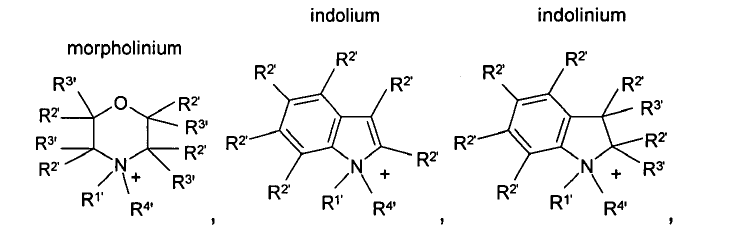 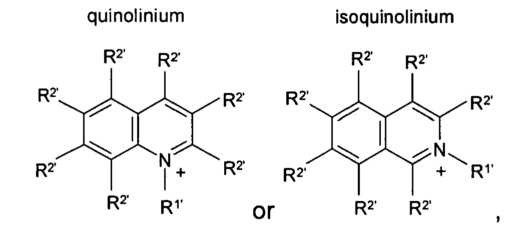 where the substituents
R^{1,} to R^{4,} each, independently of one another, denote
hydrogen,
straight-chain or branched alkyl having 1-20 C atoms,
straight-chain or branched alkenyl having 2-20 C atoms and one or more double bonds,
straight-chain or branched alkynyl having 2-20 C atoms and one or more triple bonds,
saturated, partially or fully unsaturated cycloalkyl having 3-7 C atoms, which may be substituted by alkyl groups having 1-6 C atoms, saturated, partially or fully unsaturated heteroaryl,
heteroaryl-C₁-C₆-alkyl or aryl-C₁-C₆-alkyl,
where one or more substituents R^{1,} to R^{4,} may be partially or fully substituted by halogens, in particular -F and/or -Cl, or partially by -CN or -NO₂, and where, in the substituents R^{1,} to R ^{4,} one or two non-adjacent carbon atoms which are not located in the α-position to the heteroatom may be replaced by atoms and/or atom groups selected from the group -O-, -C(O)-, -C(O)O-, -S-, -S(O)-, -SO₂-, -SO₂O-, -N=, -N=N-, -NH-, -NR'-, -PR'-, -P(O)R'-, -P(O)R'-O-, -O-P(O)R'-O-, -P(O)(NR'₂)-NR'- and -PR'₂=N-, where R' = non-, partially or perfluorinated C₁- to C₆-alkyl, C₃- to C₇-cycloalkyl, unsubstituted or substituted phenyl or an unsubstituted or substituted heterocycle.

7. Compounds according to one or more of Claims 1 to 6, **characterised in that** the substituent R in the anion is a straight-chain or branched alkyl group having 1 to 10 C atoms.

8. Compounds according to one or more of Claims 1 to 7, **characterised in that** the substituent R^{F} in the anion is a perfluorinated straight-chain or branched alkyl group having 1 to 20 C atoms.

9. Process for the preparation of the salts of the formula (1) according to one or more of Claims 1 to 8, **characterised in that** a dialkyloxonium tris(fluoroalkyl)borate of the formula (2)
(R)₂O-B(R^{F})₃ (2)
where
R denotes straight-chain or branched alkyl having 1 to 10 C atoms, aryl or aryl-C₁-C₆-alkyl and
R^{F} in each case, independently of one another, denotes fluorinated straight-chain or branched alkyl having 1 to 20 C atoms, fluorinated straight-chain or branched C₁-C₆-alkylaryl or fluorinated aryl-C₁-C₆-alkyl, is reacted with an
a) inorganic salt containing a metal cation M^{a+} or
b) with an alkylatable organic compound.

10. Compounds of the formula (2)
(R)₂O-B(R^{F})₃ (2),
in which
R denotes straight-chain or branched alkyl having 1 to 10 C atoms, aryl or aryl-C₁-C₆-alkyl and
R^{F} in each case, independently of one another, denotes fluorinated straight-chain or branched alkyl having 1 to 20 C atoms, fluorinated straight-chain or branched C₁-C₆-alkylaryl or fluorinated aryl-C₁-C₆-alkyl.

11. Process for the preparation of compounds of the formula (2), **characterised in that**
a tris(fluoroalkyl)boron carbonyl of the formula (3)
(R^{F})₃BCO (3),
where R^{F} in each case, independently of one another, denotes fluorinated straight-chain or branched alkyl having 1 to 20 C atoms, fluorinated straight-chain or branched C₁-C₆-alkylaryl or fluorinated aryl-C₁-C₆-alkyl, is reacted with a dialkyl ether of the formula (4)
(R)₂O (4),
where R in each case, independently of one another, denotes straight-chain or branched alkyl having 1 to 10 C atoms, aryl or aryl-C₁-C₆-alkyl.

12. Use of the compounds of the formula (2) according to Claim 10 as alkylating agents.

13. Process for the preparation of compounds of the formula (1) according to one or more of Claims 1 to 8, where M^{a+} is an organic cation without the restriction that a substituent of the organic cation is identical to a substituent R of the anion component, **characterised in that**
a compound of the formula (1)
M^{a+} [RO-B(R^{F})₃]ₐ (1)
in which
M^{a+} denotes an alkali metal cation, a silver, magnesium, copper, zinc or calcium cation,
a denotes 1 or 2,
R denotes straight-chain or branched alkyl having 1 to 10 C atoms, aryl or aryl-C₁-C₆-alkyl and
R^{F} in each case, independently of one another, denotes fluorinated straight-chain or branched alkyl having 1 to 20 C atoms, fluorinated straight-chain or branched C₁-C₆-alkylaryl or fluorinated aryl-C₁-C₆-alkyl,
is reacted with a compound of the formula (5)
MX (5),
in which
M is an organic cation and
the anion X denotes F⁻, Cl⁻, Br⁻, I⁻, [HF₂]⁻, [CN]⁻, [SCN]⁻, [CH₃COO]⁻, [CH₃SO₃]⁻, [CF₃COO]⁻, [CF₃SO₃]⁻, [CH₃OSO₃]⁻, [SiF₆]²⁻, [BF₄]⁻, [SO₄]²⁻, [NO₃]⁻, [C₂H₅OSO₃]⁻, [(C₂F₅)₂P(O)O]⁻, [C₂F₅P(O)O₂]²⁻, tosylate, malonate, substituted malonate or [CO₃]²⁻.

14. Use of a salt of the formula (1) according to one or more of Claims 1 and 4 to 8 as ionic liquid.

## Revendications

1. Sels d'alcoxytris((per)fluoroalkyl)borate de formule (1)
M^{a+} [RO=B(RF)₃]ₐ (1)
dans laquelle
M^{a+} désigne un cation mono- ou divalent,
a désigne 1 ou 2,
R désigne alkyle à chaîne linéaire ou ramifiée ayant de 1 à 10 atomes de C, aryle ou aryl-C₁-C₆-alkyle et
R^{F} dans chaque cas, indépendamment l'un de l'autre, désigne alkyle fluoré à chaîne linéaire ou ramifiée ayant de 1 à 20 atomes de C, C₁-C₆-alkylaryle fluoré à chaîne linéaire ou ramifiée ou aryl-C₁-C₆-alkyle fluoré.

2. Composés de formule (1) selon la revendication 1, **caractérisés en ce que** M^{a+} est un cation de métal alcalin.

3. Composés de formule (1) selon la revendication 1, **caractérisés en ce que** M^{a+} est un cation d'argent, de magnésium, de cuivre(I), de cuivre(II), de zinc(II) ou de calcium(II).

4. Composés de formule (1) selon la revendication 1, **caractérisés en ce que** M^{a+} est un cation organique.

5. Composés de formule (1) selon la revendication 4, **caractérisés en ce que** le cation organique est choisi parmi le groupe [NR¹R²R³R⁴]⁺_{,} [PR¹R²R³R⁴]⁺, [P(NR¹R²)₂(NR³R⁴)₂]⁺, [C(NR¹R²)(NR³R⁴)(NR⁵R⁶)]⁺, [(R¹R²N)-C(=OR⁷)(NR³R⁴)]⁺ ou [(R¹R²N)-C(=SR⁷)(NR³R⁴)]⁺, dans lequel
R¹ à R⁷ chacun, indépendamment l'un de l'autre, désignent
hydrogène,
alkyle à chaîne linéaire ou ramifiée ayant de 1 à 20 atomes de C,
alcényle à chaîne linéaire ou ramifiée ayant 2-20 atomes de C et une ou plusieurs doubles liaisons,
alcynyle à chaîne linéaire ou ramifiée ayant 2-20 atomes de C et une ou plusieurs triples liaisons,
cycloalkyle saturé, partiellement ou totalement insaturé ayant 3-7 atomes de C, pouvant être substitué par des groupements alkyle ayant 1-6 atomes de C,
où un ou plusieurs parmi les substituants R¹ à R⁷ peuvent être partiellement ou totalement substitués par des halogènes, en particulier -F et/ou -CI, ou partiellement par -CN ou -NO₂
et où, dans les substituants R¹ à R⁶ un ou deux atomes de carbone non adjacents qui ne sont pas en position α peuvent être remplacés par des atomes et/ou des groupes d'atomes choisis parmi le groupe constitué par -O-, -C(O)-, -C(O)O-, -S-, -S(O)-, -SO₂-, -SO₂O-, -N=, -N=N-, -NH-, -NR'-, -PR'-, -P(O)R'-, -P(O)R'-O-, -O-P(O)R'-O-, -P(O)(NR'₂)-NR'- et -PR'₂=N-, où R' = C₁-C₆-alkyle non fluoré, partiellement fluoré ou perfluoré, C₃-C₇-cycloalkyle, phényle non substitué ou substitué ou un hétérocycle non substitué ou substitué.

6. Composés de formule (1) selon la revendication 4, **caractérisés en ce que** le cation organique est un cation hétérocyclique et est choisi parmi le groupe 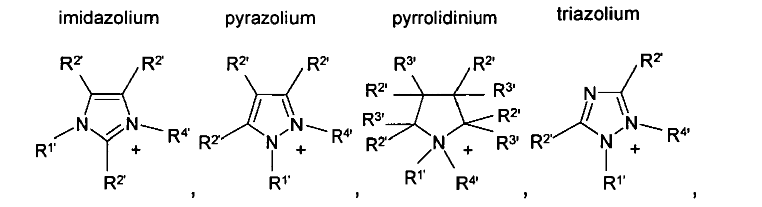 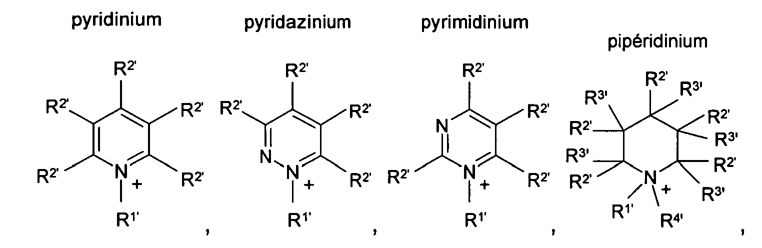 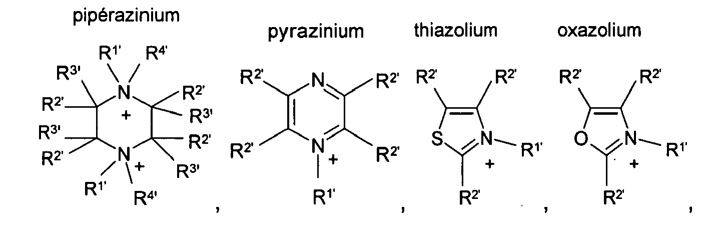 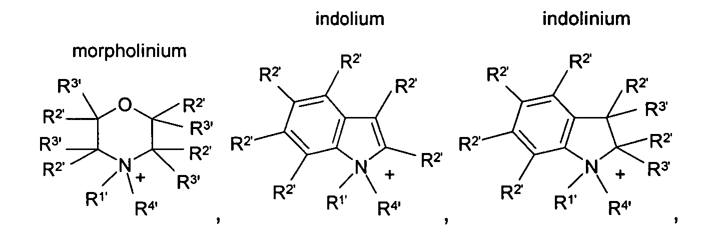 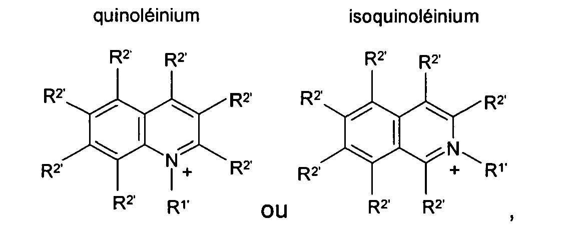 où les substituants
R^{1,} à R^{4,} chacun, indépendamment l'un de l'autre, désignent hydrogène,
alkyle à chaîne linéaire ou ramifiée ayant 1-20 atomes de C, alcényle à chaîne linéaire ou ramifiée ayant 2-20 atomes de C et une ou plusieurs doubles liaisons,
alcynyle à chaîne linéaire ou ramifiée ayant 2-20 atomes de C et une ou plusieurs triples liaisons,
cycloalkyle saturé, partiellement ou totalement insaturé ayant 3-7 atomes de C, pouvant être substitué par des groupements alkyle ayant 1-6 atomes de C,
hétéroaryle saturé, partiellement ou totalement insaturé,
hétéroaryl-C₁-C₆-alkyle ou aryl-C₁-C₆-alkyle,
où un ou plusieurs substituants R^{1,} à R^{4,} peuvent être partiellement ou totalement substitués par des halogènes, en particulier -F et/ou -Cl, ou partiellement par -CN ou -NO₂,
et où, dans les substituants R^{1,} à R^{4,}, un ou deux atomes de carbone non adjacents qui ne sont pas situés en position a par rapport à l'hétéro-atome peuvent être remplacés par des atomes et/ou des groupes d'atomes choisis parmi le groupe constitué par -O-, -C(O)-, -C(O)O-, -S-, -S(O)-, -SO₂-, -SO₂O-, -N=, -N=N-, -NH-, -NR'-, -PR'-, -P(O)R'-, -P(O)R'-O-, -O-P(O)R'-O-, -P(O)(NR'₂)-NR'- et -PR'₂=N-, où R' = C₁-C₆-alkyle non fluoré, partiellement fluoré ou perfluoré, C₃-C₇-cycloalkyle, phényle non substitué ou substitué ou un hétérocycle non substitué ou substitué.

7. Composés selon l'une ou plusieurs des revendications 1 à 6, **caractérisés en ce que** le substituant R dans l'anion est un groupement alkyle à chaîne linéaire ou ramifiée ayant de 1 à 10 atomes de C.

8. Composés selon l'une ou plusieurs des revendications 1 à 7, **caractérisés en ce que** le substituant R^{F} dans l'anion est un groupement alkyle perfluoré à chaîne linéaire ou ramifiée ayant de 1 à 20 atomes de C.

9. Procédé de préparation des sels de formule (1) selon l'une ou plusieurs des revendications 1 à 8, **caractérisé en ce qu'**un tris(fluoroalkyl)borate de dialkyloxonium de formule (2)
(R)₂O-B(R')₃ (2)
où
R désigne alkyle à chaîne linéaire ou ramifiée ayant de 1 à 10 atomes de C, aryle ou aryl-C₁-C₆-alkyle et
R^{F} dans chaque cas, indépendamment l'un de l'autre, désigne alkyle fluoré à chaîne linéaire ou ramifiée ayant de 1 à 20 atomes de C, C₁-C₆-alkylaryle fluoré à chaîne linéaire ou ramifiée ou aryl-C₁-C₆-alkyle fluoré,
est réagi avec un
a) sel inorganique contenant un cation métallique M^{a+} ou
b) avec un composé organique pouvant être alkylé.

10. Composés de formule (2)
(R)₂O-B(R^{F})₃ (2),
dans laquelle
R désigne alkyle à chaîne linéaire ou ramifiée ayant de 1 à 10 atomes de C, aryle ou aryl-C₁-C₆-alkyle et
R^{F} dans chaque cas, indépendamment l'un de l'autre, désigne alkyle fluoré à chaîne linéaire ou ramifiée ayant de 1 à 20 atomes de C, C₁-C₆-alkylaryle fluoré à chaîne linéaire ou ramifiée ou aryl-C₁-C₆-alkyle fluoré.

11. Procédé de préparation de composés de formule (2), **caractérisé en ce que**
un carbonyle de tris(fluoroalkyl)bore de formule (3)
(R^{F})₃BCO (3),
où R^{F} dans chaque cas, indépendamment l'un de l'autre, désigne alkyle fluoré à chaîne linéaire ou ramifiée ayant de 1 à 20 atomes de C, C₁-C₆-alkylaryle fluoré à chaîne linéaire ou ramifiée ou aryl-C₁-C₆-alkyle fluoré, est réagi avec un dialkyléther de formule (4)
(R)₂O (4),
où R dans chaque cas, indépendamment l'un de l'autre, désigne alkyle à chaîne linéaire ou ramifiée ayant de 1 à 10 atomes de C, aryle ou aryl-C₁-C₆-alkyle.

12. Utilisation des composés de formule (2) selon la revendication 10 comme agents alkylants.

13. Procédé de préparation de composés de formule (1) selon l'une ou plusieurs des revendications 1 à 8, où M^{a+} est un cation organique sans la limitation qu'un substituant du cation organique est identique à un substituant R du composant anion, **caractérisé en ce que**
un composé de formule (1)
M^{a+} [RO-B(R^{F})₃]ₐ (1)
dans laquelle
M^{a+} désigne un cation de métal alcalin, un cation d'argent, de magnésium, de cuivre, de zinc ou de calcium,
a désigne 1 ou 2,
R désigne alkyle à chaîne linéaire ou ramifiée ayant de 1 à 10 atomes de C, aryle ou aryl-C₁-C₆-alkyle et
R^{F} dans chaque cas, indépendamment l'un de l'autre, désigne alkyle fluoré à chaîne linéaire ou ramifiée ayant de 1 à 20 atomes de C, C₁-C₆-alkylaryle fluoré à chaîne linéaire ou ramifiée ou aryl-C₁-C₆-alkyle fluoré,
est réagi avec un composé de formule (5)
MX (5),
dans laquelle
M est un cation organique et
l'anion X désigne F⁻, Cl⁻, Br⁻, I⁻, [HF₂]⁻, [CN]⁻, [SCN]⁻, [CH₃COO]⁻, [CH₃SO₃]⁻, [CF₃COO]⁻, [CF₃SO₃]⁻, [CH₃OSO₃]⁻, [SiF₆]²⁻, [BF₄]⁻, [SO₄]²⁻, [NO₃]⁻, [C₂H₅OSO₃]⁻, [(C₂F₅)₂P(O)O]⁻, [C₂F₅P(O)O₂]²⁻, tosylate, malonate, malonate substitué ou [CO₃]²⁻.

14. Utilisation d'un sel de formule (1) selon l'une ou plusieurs des revendications 1 et 4 à 8 comme liquide ionique.
